# EUROPEAN PATENT APPLICATION

(11) **EP 1 992 889 A1**
(43) Date of publication of application: **19.11.2008**
(21) Application number: 07730357.6
(22) Date of filing: 02.03.2007
(51) Int. Cl.: F25B 27/00

(54) **THERMAL SOLAR PANEL WITH THERMODYNAMIC SUPPORT FOR COLLECTING HEAT AND PRODUCING COLD**

(30) Priority: 02.03.2006 ES 200600526
(71) Applicant: Internacional Macral De Baños, S.L., 14900 Lucena, Córdoba (ES); Marin Moscoso, Antonio, 14900 Lucena Córdoba (ES)
(72) Inventor: MARIN MOSCOSO, Antonio, Córdoba (ES)
(74) Representative: Tari Lazaro, Aida
(86) International application number: PCT/ES2007/000116
(87) International publication number: WO 2007/099189

(57) **Abstract**

The invention comprises a thermal solar collector (2), which incorporates a coil through which circulates a water/glycol mixture, and a thermodynamic panel (1) coupled to the solar collector via separators (5) or by means of a panel of polyurethane or another, suitable insulator, the combination of the two circuits successfully complementing one another and thereby affording optimization of the solar energy collecting panel. The circuit of the thermodynamic panel (1) may be inverted, in which case the thermal solar panel (2) is used as protection against the sun for the thermodynamic part of the panel, thereby increasing the efficiency of the cold-production system based on condensation/evaporation, causing the thermal solar panel to function simultaneously as a means whereby water can be heated.

## Description

### Object of the invention

The aim of the present invention is to patent a device for the collecting of solar energy in its thermal aspects, with back-up in the absence of sun from another high energy efficiency system as is the thermodynamic one, this invention having the purpose of exploiting the direct solar energy in combination with the exploitation of the energy contained in the environment in the form of temperature, and likewise on hot days to produce cold by causing the thermodynamic part of the panel to function as a condenser, and using the thermal part for the production of hot water.

### Field of the invention

This invention comes within the field of alternative energies in general, having its application within the manufacture of products for the exploitation of solar energy and energy contained in the environment in the form of temperature.

### Description of the invention

Systems for thermal solar collection at low temperature on which the present invention is based are very well known in the current state of the art. As back-up for nights or during hours of little or no sun, as in very cloudy and cold days in winter, these systems possess an electrical resistance of the kind used for heating sanitary water, of variable power according to the capacity and consumption of the installation, and which have as their main characteristic a high consumption of electrical energy which largely counteracts the ecological concept of this type of solar collectors of the type known as thermal, since they make excessive use of conventional energy, as is electrical energy, thereby having a negative influence on the ecological principle of the thermal solar collecting system as such. This equally occurs with other back-up systems normally used, such as gas-oil and other derivatives of petroleum, which are polluting and increasingly expensive owing to the progressive exhaustion of fossil fuel reserves.

Specifically, the present invention proposes using a panel of variable measurements according to the application and power to use, of the type known as thermal collection, and which can be a flat collector, or in the form of coils or be constructed on the basis of vacuum tubes (all of them known in the current state of the art and commonly used in present-day installations for collection of thermal solar energy at low temperature). To this, another panel or plate has been added on to the rear part which can be of the same size and shape or be different, as appropriate, this second plate functioning according to the thermodynamic principle (Joule) of collecting calories by means of the evaporation of a low boiling point liquid in the interior circuit of it, thereby collecting calories from the air, rainwater, the wind and solar reflection. By means of a compressor circuit of the kind used in the cooling and heating of homes and water, these calories are led to the heat exchanger located inside the system, for its later exploitation in the heating of sanitary water, radiating floors, swimming pools or for any other application in which water or any other material needs to be heated. This array functions as back-up for the heating system in place of the conventional electrical resistance or the butane gas or gas-oil burner of heat collectors known in the current state of the art, thereby achieving a consumption of electricity that is 5 to 10 times less for the same output and thus increasing the output of the system by the same proportion in the absence of sun.

Equally, and by means of inverting the thermodynamic circuit making up the panel forming the object of this invention, we can produce cold for the climatization of homes, on the basis of using the thermodynamic part of our panel as a condenser instead of as an evaporator, exploiting the fact that it is protected from the direct sun by means of the thermal part of the panel, thereby achieving a higher output than that of present-day conditioned air installations that use a "heat pump", due to the absence of motors for the aeration and temperature dissipation of the condenser to the air, with the consequent energy saving, this dissipation being carried out by natural convection and radiation to the external environment on account of the large surface area exposed to the air which we have with our panel.

Both the thermal and the thermodynamic principles which we take as the basis are extremely well known in the current state of the art, though the combination of both principles in a single element has not previously been used, at least not to the knowledge of the inventor, and this is what forms the basis of the present invention.

Apart from the design, size or material, the hot-cold panel which we propose will comprise certain basic elements as are: First, we have a panel made of aluminium, copper or other material, which possesses in its interior or backed on to it a circuit or coil, through which circulates the liquid responsible for the transport of calories, preferably lacquered or anodised in low emissivity selective black colour on its face exposed to the sun, and which has as its fundamental property a large capacity for absorbing solar heat. Flowing through this circuit is a fluid of the kind normally used in heating and cooling, for heat transport, which has to have among its properties mainly those of low coefficient of expansion, low volatility, low freezing point and low toxicity and flammability, as might be mixtures of water with glycol, water/glycerine, synthetic oils, molten salts, or any other novel mixture that might appear performing the same role. Another possible alternative would be to use what are known as vacuum tubes, which are well known in the sector of thermal solar energy, in all cases being responsible for transporting the calories collected directly from the sun. The calories are accumulated in the heat exchanger located preferably in the interior of the installation, for the later storage or immediate exploitation in the form of heating, sanitary water or climatization of swimming pools. Secured to the thermal solar panel via its rear part by means of some separators is a second panel made of aluminium, copper, steel or other material, inside of which or backing on to which is a circuit of a calculated shape and size via which will flow a refrigerant liquid (134A, 407A, etc.), which when it expands and starts to boil becomes converted into a gas and will cool the thermodynamic panel thus formed to a temperature of between -5° and - 17°, very much lower than the normal temperature of the environment, collecting all the calories from its physical surroundings and which, due to sharing a support with the thermal panel, saves both the cost of the securing support and the space for installing it.

We thus achieve a panel for the solar and ambient thermal collection with high gain, responsible for supporting the first panel during hours of low or null solar radiation, on the basis of the thermodynamic principle by which air conditioning apparatus and heat pumps function, which, combining the average efficiency of a thermal solar panel at low temperature, which has an efficiency of around 70 % due to direct or diffuse solar exploitation with that of the back-up thermodynamic system, which produces 5 to 10 times more calorific power than the electrical power it consumes, means that we have a system with an energy efficiency of more than 90 %, a level that has not so far been achieved by any other means, with the consequent aid for the environment on the basis of the collection and exploitation of clean alternative energy coming from the sun, and the consequent diminution of polluting gases due to replacing conventional energy sources with energy having a solar and environmental origin.

Finally, we have a thermal solar panel or plate, joined to a thermodynamic functioning panel, thereby saving both the cost of this support and the space needed for installing it, and thus having a solar thermal collection system of high gain, joined to a thermodynamic system which we will be able to use for reinforcing the above array during hours of low or null solar radiation, with both sets of equipment being able also to function independently, with the obvious advantages that this entails in case of failure in one of the two or situations of extreme cold, and finally, we will also be able to use it for the production of cold on the basis of the above description, for air conditioning and, simultaneously with the other panel, for the production of heat for sanitary water or swimming pools.

The final aesthetics of the hot-cold solar panel presented here can be as varied as designs that are wished to made of it, at all times maintaining the technical requisites that are indispensable for its functioning.

### Description of the drawings

In order to complete the description being made and with the aim of aiding a better understanding of the features of the thermal solar collector that we propose, this descriptive specification is accompanied by the following figures, as an integral part thereof:
Figure 1, in which are represented the thermal solar panel (2) and the thermodynamic panel (1) prior to being coupled together.
Figure 2, in which the assembled thermal unit is represented, comprising the panels described above and the separators giving rise to the insulation of them both.

### Description of the preferred embodiment

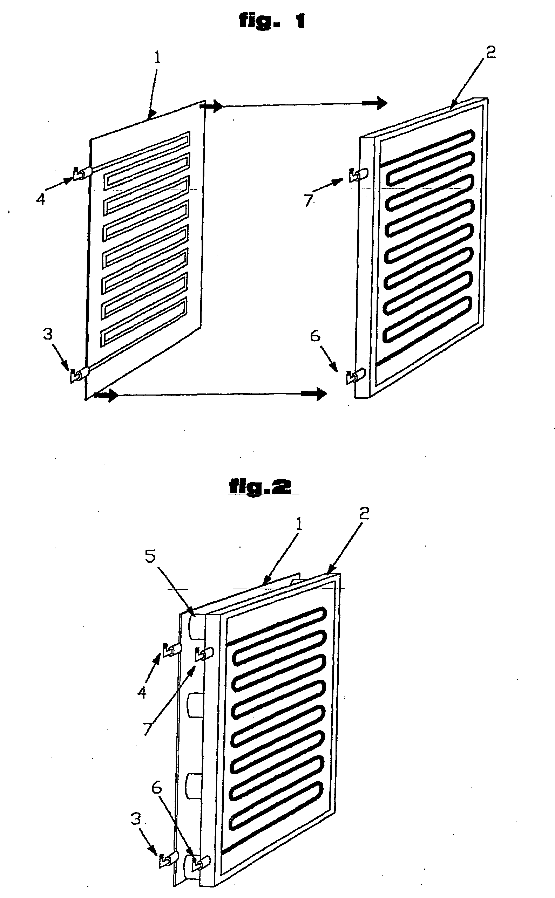

The detailed description of the preferred embodiment of the procedure of the present invention and of the elements comprising it is made with both figures in view. Figure 1 shows the hot-cold panel (1) with an inlet (3) and an outlet (4) for the circuit through which the refrigerant gas will circulate and which will act as the evaporator, for the capture of heat, or as a condenser in the event of cooling homes, the panel (2) being responsible for the collection of calories coming from the sun which are transported to the heat exchanger of the system causing water with glycol or other product suitable for heating to circulate around its interior. Therefore, the thermal unit will be made up of the inlet pipe or mouth (6) through which the thermal fluid (glycol or others) enters which, when circulating via the circuit of the panel (2), driven by the recirculation pump, will collect the calories trapped by the panel from the sun, withdrawing them through the outlet pipe or mouth (7), these calories being transported to the thermal unit or heat exchanger provided for this purpose, the assembled unit functioning via the separators (5), as can be seen in figure 2, where the two panels are joined forming the object element of this patent.

The functioning preference established for producing just heat will be the thermal solar collector, with the thermodynamic part being subject in its functioning to a drop in the temperature of the thermal panel which, in this preferred embodiment, we cause to function in a preferred way for obvious reasons of energy ergonomics, though we could cause it to function simultaneously for the production of cold by inverting the circuit in the thermodynamic panel, and for the production of heat by collecting calories for sanitary water or swimming pools with the thermal panel.

## Claims

1. Thermal solar panel with thermodynamic support for collecting heat and producing cold, **characterized by** collecting direct thermal solar energy by means of a thermal solar collector (2), comprising a coil through which circulates a water/glycol mixture with an inlet (6) and an outlet (7) for the continuation of the circuit, and at the same time collecting the ambient temperature by means of a thermodynamic panel (1) coupled to the solar collector via some separators (5), or by means of a polyurethane panel or one made of other insulators suitable for thermal insulation between the two, with an inlet (3) and an outlet (4) for the refrigerant liquid, the combination of the two circuits successfully complementing one another and thereby affording optimization of the solar energy collecting panel.

2. Thermal solar panel with thermodynamic support for collecting heat and producing cold, as with claim 1, **characterized by** being able to invert the circuit of the thermodynamic unit, in this case using the thermal-solar part as protection regarding the sun for the thermodynamic part of the panel, thereby increasing the efficiency of the cold production system based on condensation/evaporation, causing the thermal solar panel to function simultaneously, both for the production of heat for heating water and for the production of cold in air conditioning.
